# FASCICULE DE BREVET EUROPEEN

(11) **EP 4 303 887 B1**
(45) Date de publication et mention de la délivrance du brevet: **25.12.2024**
(21) Numéro de dépôt: 23182774.2
(22) Date de dépôt: 30.06.2023
(51) Int. Cl.: G21F 5/008, G21F 5/012, G21F 5/06, G01K 3/04, G01K 5/62, G01K 5/70, F16K 31/00

(54) **DISPOSITIF DE MESURE D'UNE TEMPÉRATURE MAXIMALE D'UN COMPOSANT PLACÉ DANS UNE ENCEINTE DE CONFINEMENT D'UN ENSEMBLE DE MATIÈRES RADIOACTIVES**
VORRICHTUNG ZUR MESSUNG EINER MAXIMALEN TEMPERATUR EINES IN EINEM SICHERHEITSBEHÄLTER EINER VERPACKUNG MIT EINEM SATZ RADIOAKTIVER MATERIALIEN POSITIONIERTEN BAUTEILS
DEVICE FOR MEASURING A MAXIMUM TEMPERATURE OF A COMPONENT PLACED IN A CONTAINMENT CHAMBER OF A PACKAGE LOADED WITH A SET OF RADIOACTIVE MATERIALS

(30) Priorité: 05.07.2022 FR 2206855
(43) Date de publication de la demande: 10.01.2024
(73) Titulaire: ORANO NUCLEAR PACKAGES AND SERVICES, 78180 Montigny-le-Bretonneux (FR)
(72) Inventeur: NALLET, Stéphane, 78320 Le Mesnil-Saint-Denis (FR); BENOIT, Marie, 91120 Palaiseau (FR); MACE, Jean-Reynald, 91120 Palaiseau (FR); PITONE, Gilbert, 38320 Eybens (FR); ROBERT, Jonathan, 38100 Grenoble (FR); BRUTEL, Nicolas, 38170 Seyssinet-Pariset (FR)
(74) Mandataire: Brevalex

(56) Documents cités:
- WO-A1-2019/009462
- FR-A1- 2 812 939
- US-A1- 2017 125 132

## Description

### DOMAINE TECHNIQUE

La présente invention se rapporte au domaine du transport et/ou de l'entreposage de matières radioactives, préférentiellement des assemblages de combustible nucléaire. L'invention concerne plus spécifiquement la mesure de la température maximale de composants placés dans une enceinte de confinement d'un emballage chargé de matières radioactives.

### ÉTAT DE LA TECHNIQUE ANTÉRIEURE

Il est souhaitable de connaître la température maximale atteinte par certains composants d'un ensemble de matières radioactives situé dans l'enceinte de confinement d'un emballage, au cours de son transport et/ou de son entreposage, ou encore lors d'une opération d'exploitation, comme le séchage de l'enceinte de confinement de l'emballage après y avoir chargé les matières radioactives.

C'est par exemple le cas pour les gaines des crayons combustibles présents au sein des assemblages de combustible nucléaire, ou encore pour certains composants constitutifs du panier de rangement maintenant ces assemblages de combustible au sein de l'enceinte de confinement.

Plusieurs technologies peuvent être envisagées pour la mesure de la température de ces composants. Néanmoins, une difficulté majeure apparait lorsque la conception de l'emballage est telle qu'elle empêche la communication entre le composant, et l'extérieur de l'enceinte de confinement, ou bien lorsqu'il demeure impossible d'observer le capteur de température à travers l'enceinte fermée.

Il est certes possible de lire la température sur le capteur après l'ouverture de l'enceinte de confinement, mais la température indiquée à cet instant s'avère souvent inférieure à la température maximale observée durant le transport, l'entreposage, ou encore durant certaines opérations d'exploitation de l'emballage. Or c'est cette température maximale atteinte par les composants qui constitue la donnée la plus utile, mais les technologies de mesure de température connues de l'art antérieur ne semblent pas en mesure d'apporter une solution capable de la détecter dans le cas d'une conception spécifique de l'emballage, telle que décrite ci-dessus.

Le document FR 2 812 939 A1 divulgue un procédé et un dispositif de détection et d'enregistrement d'une température maximale à l'intérieur d'une enceinte fermée et destinée à contenir une charge produisant de la chaleur jusqu'à une valeur de température maximale prédéterminée. À l'intérieur de l'enceinte une pluralité d'éléments fusibles ayant chacun une température de fusion propre sont disposées, la fourchette des températures minimale et maximale de fusion de ces éléments couvrant ladite température maximale prédéterminée et un contrôle optique ou visuel de l'intégrité des éléments fusibles est effectué pour déterminer la valeur maximale de la température atteinte à l'intérieur de l'enceinte correspondant à la fusion d'un ou de plusieurs éléments fusibles.

### EXPOSÉ DE L'INVENTION

L'invention a donc pour but de répondre à l'inconvénient identifié ci-dessus. Pour ce faire, l'invention a tout d'abord pour objet un dispositif de mesure d'une température maximale atteinte par un composant placé dans une enceinte de confinement d'un emballage chargé d'un ensemble de matières radioactives, le dispositif de mesure comportant les éléments suivants :
- un chariot mobile ;
- un corps fixe définissant un chemin de guidage du chariot mobile ;
- un actionneur du chariot mobile, l'actionneur étant sensible à la température de sorte qu'une augmentation de celle-ci entraîne une expansion de cet actionneur, ce dernier étant capable, en fonction de l'amplitude de son expansion, de provoquer un déplacement du chariot mobile le long du chemin de guidage, en direction d'une première extrémité de celui-ci ; et
- un mécanisme de maintien en position du chariot mobile par rapport au corps fixe, le mécanisme étant conçu de manière à maintenir le chariot mobile dans toute nouvelle position s'approchant davantage de ladite première extrémité du chemin de guidage, suite à un déplacement provoqué par l'expansion de l'actionneur.

Ainsi, l'invention propose avantageusement un dispositif de mesure de température à configuration simple, fiable, ne nécessitant pas d'accès / de fenêtre de visualisation à l'intérieur de l'enceinte de confinement, et dont les données sur la température maximale sont conservées même après l'ouverture de cette enceinte. La simplification provient en particulier du principe visant à ne conserver, à chaque instant t, que la température maximale atteinte par le composant au cours de son temps de séjour écoulé dans l'enceinte de confinement, durant le transport, l'entreposage, ou encore durant certaines opérations d'exploitation de l'emballage. Il en résulte un gain en matière de coûts, et également une facile implantation dans les emballages existants.

L'invention présente de préférence au moins l'une des caractéristiques optionnelles suivantes, prises isolément ou en combinaison.

De préférence, l'actionneur du chariot mobile forme un poussoir pour le chariot mobile. A cet égard, il est noté que l'actionneur n'est pas nécessairement un poussoir logé dans la même cavité que le chariot mobile. Ces deux éléments peuvent effectivement être placés dans deux cavités distinctes, tout en coopérant l'un avec l'autre pour la transmission de mouvement.

De préférence, l'actionneur du chariot comprend une pluralité de rondelles bilames coaxiales, et dont au moins plusieurs d'entre elles directement consécutives sont agencées en opposition les unes par rapport aux autres, de sorte à se déformer selon des sens opposés en réponse à une augmentation de température.

De préférence, le mécanisme de maintien du chariot mobile comporte au moins l'un des éléments suivants :
- une crémaillère ;
- une rondelle anti-retour ;
- une vis de pression ;
- un système magnétique.

De préférence, le corps fixe comporte une graduation de température, et le chariot mobile comporte un indicateur coopérant avec la graduation, ou réciproquement.

De préférence, l'indicateur prévu sur le chariot mobile traverse au moins une lumière du corps fixe.

De préférence, le chemin de guidage est droit, mais il pourrait alternativement suivre une ligne non-droite, par exemple courbe, sans sortir du cadre de l'invention.

De préférence, le corps fixe comporte une tige, de préférence traversant le chariot mobile. Préférentiellement, cette tige traverse les rondelles bilames précitées.

De préférence, le corps fixe comporte une enveloppe extérieure, de préférence en forme de tube, encore plus préférentiellement de diamètre extérieur inférieur à 30 mm, et par exemple de l'ordre de 8 mm.

L'invention a également pour objet un colis comprenant un emballage chargé d'un ensemble de matières radioactives, délimitant intérieurement une enceinte de confinement dans laquelle est logé ledit ensemble de matières radioactives, et comportant également au moins un dispositif de mesure selon l'une quelconque des revendications précédentes, logé dans l'enceinte de confinement.

De préférence, l'ensemble de matières radioactives comporte des assemblages de combustible nucléaire équipés de tubes guides, et ledit au moins un dispositif de mesure est logé à l'intérieur de l'un des tubes guides. En logeant un ou plusieurs dispositifs de mesure à l'intérieur d'un tube guide, il est recherché à déterminer la température d'une gaine de crayon combustible.

Aussi, préférentiellement, il est prévu plusieurs dispositifs de mesure logés dans le tube guide, à des positions axiales différentes de celui-ci.

Enfin, l'ensemble de matières radioactives comporte un panier de rangement d'assemblages de combustible nucléaire, et ledit au moins un dispositif de mesure peut aussi être fixé sur un composant de ce panier.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
[Fig. 1] représente une vue schématique en coupe axiale d'un colis selon l'invention ;
[Fig. 2] représente une vue partielle en perspective d'un assemblage de combustible nucléaire destiné à être logé dans une enceinte de confinement du colis montré sur la figure précédente ;
[Fig. 3A] représente une vue schématique en coupe axiale d'un dispositif de mesure de température, selon un premier mode de réalisation préféré de l'invention ;
[Fig. 3B] représente une vue schématique en coupe axiale du dispositif de mesure de température montré sur la figure précédente, après une hausse de la température ;
[Fig. 3C] représente une vue schématique en coupe axiale du dispositif de mesure de température montré sur la figure précédente, après une hausse additionnelle de la température ;
[Fig. 3D] représente une vue schématique en coupe axiale du dispositif de mesure de température montré sur la figure précédente, après une baisse de la température ;
[Fig. 4] représente une vue schématique de côté d'une partie du dispositif de mesure de température montré sur la figure 3A ;
[Fig. 5] représente une vue schématique en coupe axiale de l'actionneur formant partie intégrante du dispositif de mesure de température montré sur les figures précédentes ;
[Fig. 6] représente une vue schématique en coupe axiale d'un dispositif de mesure de température, selon un second mode de réalisation préféré de l'invention ;
[Fig. 7] représente une vue en perspective d'un dispositif de mesure de température, selon un troisième mode de réalisation préféré de l'invention ;
[Fig. 8] représente une vue coupée en perspective d'une partie du dispositif de mesure de température montré sur la figure 7 ; et
[Fig. 9] représente une vue coupée en perspective d'une autre partie du dispositif de mesure montré sur la figure 7.

### EXPOSÉ DES MODES DE RÉALISATION

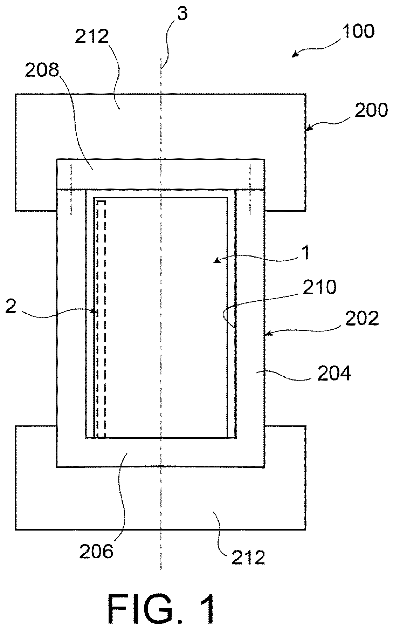

En référence à la figure 1, il est représenté un colis 100 comprenant un emballage 200 pour l'entreposage et/ou le transport d'assemblages de combustible nucléaire 2, de préférence irradiés. L'emballage 200 présente un corps 202 formé par un corps latéral 204, un fond 206, et un couvercle amovible 208. Le fond 206 et le couvercle 208 sont espacés l'un de l'autre selon l'axe central longitudinal 3 de l'emballage, autour duquel s'étend le corps latéral 204.

L'emballage 200 définit à l'intérieur de son corps une cavité 210, dite enceinte de confinement, dans laquelle se trouve logé un dispositif de rangement 1, qui sera dénommé « panier » dans la suite de la description. Le panier 1 et les assemblages de combustible nucléaire 2 qu'il maintient forment un ensemble de matières radioactives, au sens de la présente invention. De manière connue, le panier 1 comprend une pluralité de logements adjacents chacun destiné à recevoir l'un des assemblages de combustible nucléaire 2. Lorsque l'ensemble de matières radioactives ainsi formé est logé dans l'enceinte de confinement 210 de l'emballage 200, il constitue avec l'emballage 200 le colis 100.

A titre indicatif, il est noté qu'aux extrémités axiales de l'emballage, celui-ci peut présenter des capots amortisseurs de chocs 212, recouvrant respectivement le couvercle 208 et le fond 206 du corps 202 de cet emballage.

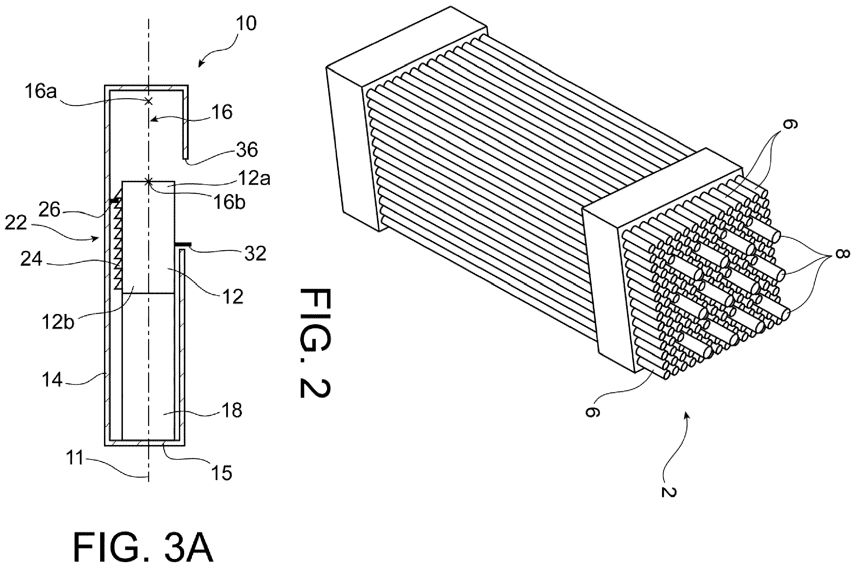

La particularité de l'invention réside dans la mise en oeuvre d'un dispositif de mesure de température maximale atteinte par un composant placé dans l'enceinte de confinement 210. Ce composant peut être un élément constitutif du panier 1, mais dans un mode de réalisation préféré envisagé, le dispositif de mesure de température est destiné à être logé dans l'un des tubes guides 8 présents au sein de l'un des assemblages 2. Les tubes guides 8 sont représentés sur la figure 2. De préférence, le dispositif de mesure qui sera décrit ultérieurement est destiné à être logé à l'intérieur du tube guide 8. A titre d'exemple, le diamètre interne du tube guide peut être de l'ordre de 8,5 mm, et le diamètre externe du dispositif de mesure de l'ordre de 8 mm.

Bien entendu, plusieurs dispositifs de mesure peuvent être fixés dans un même tube guide 8, de préférence à des positions axiales différentes, présentant des profils de températures distincts. De même, l'implantation de ces dispositifs de mesure de température, spécifiques à l'invention, peuvent concerner plusieurs tubes guides 8 d'un même assemblage 2, et peuvent aussi concerner plusieurs assemblages 2 de l'ensemble de matières radioactives présent dans l'enceinte de confinement 210.

Cette implantation au sein des tubes guides 8 se révèle particulièrement appropriée pour déterminer la température des gaines des crayons de combustible 6 intégrés au sein des assemblages 2.

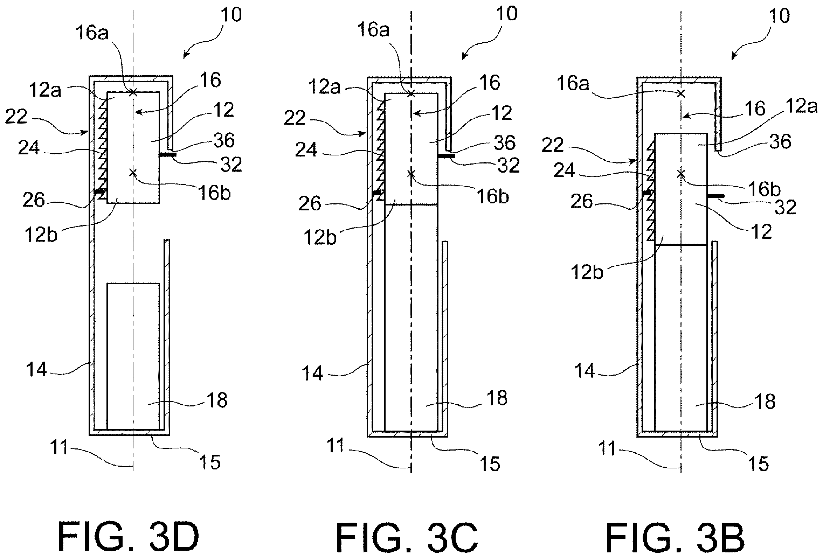

En référence à présent aux figures aux figures 3A à 5, il est représenté un premier mode de réalisation préféré du dispositif 10 de mesure de température.

Tout d'abord, le dispositif de mesure 10 comporte un chariot mobile 12, ici en forme de tube ou de cylindre centré sur un axe central longitudinal 11 de ce dispositif.

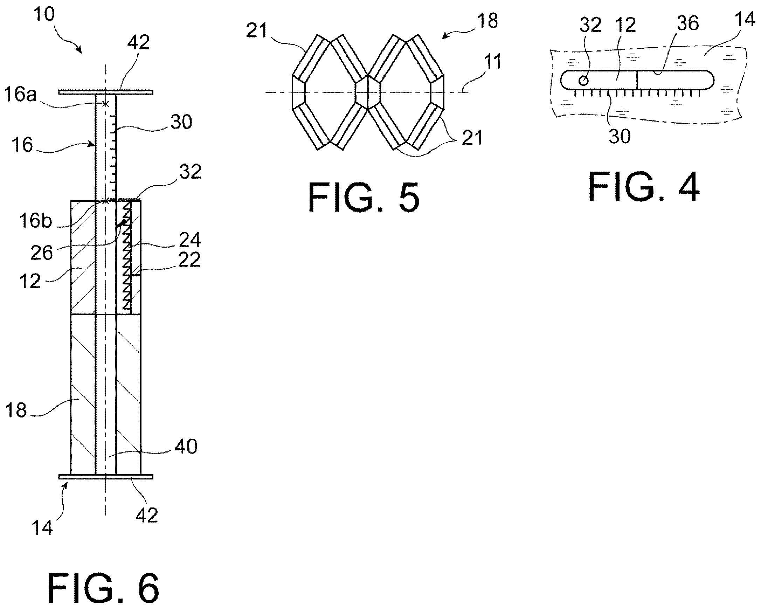

Il comporte également un corps fixe 14 en forme d'enveloppe cylindrique ou de tube fermé à ses deux extrémités, constituant l'enveloppe extérieure du dispositif 10. Le corps 14 est également centré sur l'axe 11, et reçoit le chariot mobile 12 de manière à lui définir un chemin de guidage 16. Ce chemin 16 est droit, superposé à l'axe 11, et défini entre une première extrémité 16a ainsi qu'une seconde extrémité 16b opposée à la première. Pour permettre le déplacement du chariot 12 à l'intérieur du corps fixe 14 le long du chemin 16, le dispositif de mesure 10 comporte également un actionneur 18. Ici, l'actionneur est en forme de poussoir axial, et il est interposé axialement entre un fond du corps fixe 14, et une extrémité axiale 12b du chariot 12. La conception de cet actionneur 18 est telle qu'il présente une sensibilité à la température, de sorte qu'une augmentation de celle-ci entraîne une expansion de cet actionneur dans la direction axiale. Pour ce faire, une conception d'actionneur à rondelles bilames coaxiales 21 peut être retenue, comme représenté schématiquement sur la figure 5. Dans cet actionneur 18, au moins plusieurs des rondelles bilames 21 directement consécutives sont agencées en opposition les unes par rapport aux autres, de manière à se déformer selon des sens opposés en réponse à une augmentation de température.

En réponse à une augmentation de la température, l'expansion de l'actionneur 18 provoque le déplacement du chariot 12 en appuyant sur son extrémité axiale 12b. L'amplitude du déplacement du chariot 12, le long du chemin 16 en direction de sa première extrémité 16a, correspond à l'amplitude d'expansion de l'actionneur 18, elle-même dépendant de l'augmentation de la température.

Le dispositif de mesure 10 comporte un mécanisme particulier 22 de maintien en position du chariot mobile 12 par rapport au corps fixe 14. Ce mécanisme 22 est ici formé par une crémaillère, par exemple en prévoyant une piste axiale dentée 24 solidaire du chariot 12, ainsi qu'un cran 26 coopérant avec la piste dentée et monté sur une surface intérieure du corps fixe 14. Le cran 26 peut être flexible, ou bien sous forme de cliquet.

Les orientations particulières des dents et du cran de la crémaillère sont telles qu'elles permettent aisément, et sans effort, le déplacement du chariot 12 en direction de la première extrémité 16a du chemin de guidage. En revanche, elles interdisent le déplacement du chariot 12 en direction de la seconde extrémité 16b du chemin de guidage. Par conséquent, le mécanisme 22 maintient avantageusement le chariot 12 dans toute nouvelle position s'approchant davantage de la première extrémité 16a du chemin de guidage 16, suite à un déplacement provoqué par l'expansion de l'actionneur 18. Ainsi, les dents et le cran de la crémaillère interdisent le déplacement du chariot 12 en direction du pied 15 de l'enveloppe extérieure 14, contre lequel repose l'actionneur 18. En d'autres termes, en cas de baisse de la température du composant au cours du transport/ de l'entreposage, l'actionneur 18 se rétracte axialement mais le chariot 12 reste dans sa position relative au corps fixe 14, comme cela est montré par la comparaison des figures 3C et 3D.

Pour renseigner sur la température maximale atteinte au cours du transport / de l'entreposage, le corps fixe 14 comporte une graduation de température 30, et le chariot mobile 12 est équipé d'un indicateur 32 coopérant avec cette graduation. Comme cela est le mieux visible sur la figure 4, l'indicateur 32 prévu sur le chariot 12 présente une forme de pion ou d'ergot traversant une lumière 36 du corps fixe 14.

Ainsi, le dispositif de mesure 10 présente une configuration simple qui ne requiert pas d'accès / de fenêtre de visualisation à l'intérieur de l'enceinte de confinement de l'emballage. Et, surtout, les données sur la température maximale sont conservées même après l'ouverture de cette enceinte, puisque la position relative entre l'indicateur 32 et la graduation 30, atteinte suite à l'exposition du dispositif 10 à la température maximale, reste conservée même après une éventuelle baisse ultérieure de la température.

Il est noté que le mécanisme de maintien 22 pourrait adopter une autre forme que celle d'une crémaillère, par exemple une vis de pression, un système magnétique, ou encore une rondelle anti-retour.

Dans le second mode de réalisation préféré représenté sur la figure 6, le corps fixe 14 comporte une tige centrale 40, centrée sur l'axe 11. Cette tige 40 traverse l'actionneur 18 et le chariot 12. Il est noté que la traversée de l'actionneur 18 est particulièrement aisée lorsque celui-ci est formé par les rondelles bilames précitées.

Aux extrémités opposées de la tige 40, le corps fixe 14 comporte deux butées axiales 42 coopérant respectivement avec la première extrémité 16a du chemin de guidage, et avec une extrémité de l'actionneur 18. La graduation 30 est marquée sur la surface extérieure de la tige fixe 40.

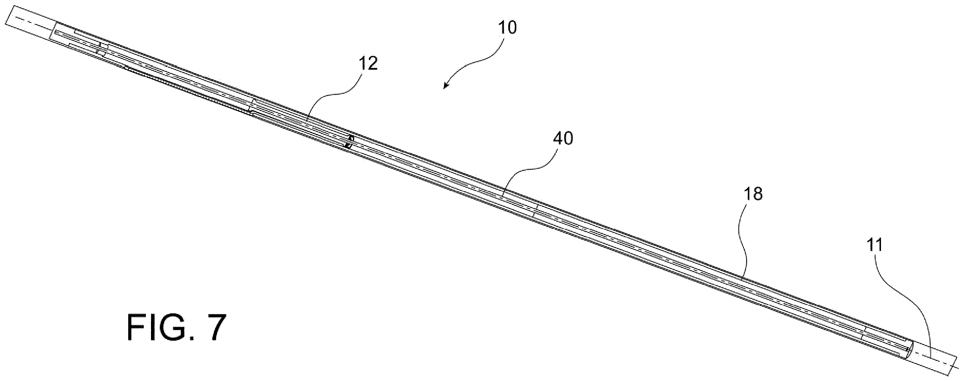

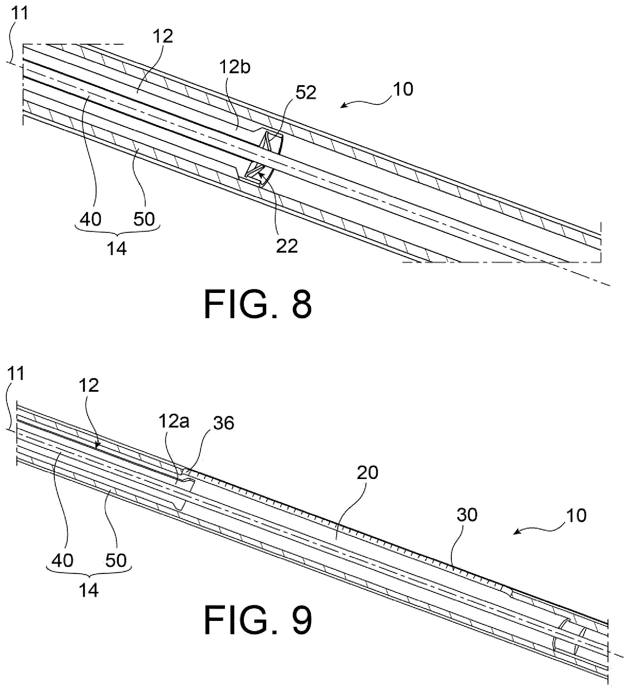

Les figures 7 à 9 représentent quant à elles un troisième mode de réalisation préféré de l'invention, dans lequel le corps fixe 14 comporte en plus de la tige intérieure 40 une enveloppe extérieure 50 en forme de tube fermé à ses extrémités, et centré sur l'axe 11. L'enveloppe extérieure 50, de diamètre extérieur de l'ordre de 8 mm, peut présenter une longueur de plusieurs dizaines de centimètres. Comme évoqué précédemment, le mécanisme de maintien 22 comprend ici une rondelle anti-retour 52 solidaire de l'extrémité axiale 12a du chariot mobile 12, et coopérant avec la tige intérieure 40 qu'elle traverse.

Bien entendu, diverses modifications peuvent être apportées par l'homme du métier à l'invention qui vient d'être décrite, uniquement à titre d'exemples non limitatifs, et dans la limite de la portée définie par les revendications annexées. En particulier, les différents modes de réalisation préférés peuvent être combinés entre eux.

## Revendications

1. Dispositif (10) de mesure d'une température maximale atteinte par un composant placé dans une enceinte de confinement (210) d'un emballage (200) chargé d'un ensemble de matières radioactives, le dispositif de mesure étant **caractérisé en ce qu'**il comporte les éléments suivants :
- un chariot mobile (12) ;
- un corps fixe (14) définissant un chemin de guidage (16) du chariot mobile ;
- un actionneur (18) du chariot mobile, l'actionneur étant sensible à la température de sorte qu'une augmentation de celle-ci entraîne une expansion de cet actionneur, ce dernier étant capable, en fonction de l'amplitude de son expansion, de provoquer un déplacement du chariot mobile (12) le long du chemin de guidage (16), en direction d'une première extrémité (16a) de celui-ci ; et
- un mécanisme (22) de maintien en position du chariot mobile (12) par rapport au corps fixe (14), le mécanisme étant conçu de manière à maintenir le chariot mobile (12) dans toute nouvelle position s'approchant davantage de ladite première extrémité (16a) du chemin de guidage (16), suite à un déplacement provoqué par l'expansion de l'actionneur (18).

2. Dispositif de mesure selon la revendication 1, **caractérisé en ce que** l'actionneur (18) du chariot mobile (12) forme un poussoir pour le chariot mobile.

3. Dispositif de mesure selon la revendication 1 ou 2, **caractérisé en ce que** l'actionneur (18) du chariot (12) comprend une pluralité de rondelles bilames (21) coaxiales, et dont au moins plusieurs d'entre elles directement consécutives sont agencées en opposition les unes par rapport aux autres, de sorte à se déformer selon des sens opposés en réponse à une augmentation de température.

4. Dispositif de mesure selon l'une quelconque des revendications précédentes, **caractérisé en ce que** le mécanisme (22) de maintien du chariot mobile comporte au moins l'un des éléments suivants :
- une crémaillère (24, 26) ;
- une rondelle anti-retour (52) ;
- une vis de pression ;
- un système magnétique.

5. Dispositif de mesure selon l'une quelconque des revendications précédentes, **caractérisé en ce que** le corps fixe (14) comporte une graduation de température (30), et **en ce que** le chariot mobile (12) comporte un indicateur (32) coopérant avec la graduation (30), ou réciproquement.

6. Dispositif de mesure selon l'une quelconque des revendications 1 à 4, **caractérisé en ce que** le corps fixe (14) comporte une graduation de température (30) et **en ce que** le chariot mobile (12) comporte un indicateur (32) coopérant avec la graduation (30), l'indicateur (32) prévu sur le chariot mobile (12) traversant au moins une lumière (36) du corps fixe (14).

7. Dispositif de mesure selon l'une quelconque des revendications précédentes, **caractérisé en ce que** le chemin de guidage (16) est droit.

8. Dispositif de mesure selon l'une quelconque des revendications précédentes, **caractérisé en ce que** le corps fixe (14) comporte une tige (40), de préférence traversant le chariot mobile (12).

9. Dispositif de mesure selon la revendication précédente combinée à la revendication 3, **caractérisé en ce que** la tige (40) traverse les rondelles bilames (21).

10. Dispositif de mesure selon l'une quelconque des revendications précédentes, caractérisé ce que le corps fixe (14) comporte une enveloppe extérieure (50), de préférence en forme de tube, et encore plus préférentiellement de diamètre extérieur inférieur à 30 mm.

11. Colis (100) comprenant un emballage (200) chargé d'un ensemble de matières radioactives, délimitant intérieurement une enceinte de confinement (210) dans laquelle est logé ledit ensemble de matières radioactives (1, 2), et comportant également au moins un dispositif de mesure (10) selon l'une quelconque des revendications précédentes, logé dans l'enceinte de confinement (210).

12. Colis selon la revendication précédente, **caractérisé en ce que** l'ensemble de matières radioactives comporte des assemblages de combustible nucléaire (2) équipés de tubes guides (8), et **en ce que** ledit au moins un dispositif de mesure (10) est logé à l'intérieur de l'un des tubes guides (8).

13. Colis selon la revendication précédente, **caractérisé en ce que** plusieurs dispositifs de mesure (10) sont logés dans le tube guide (8), à des positions axiales différentes de celui-ci.

14. Colis selon l'une quelconque des revendications 11 à 13, **caractérisé en ce que** l'ensemble de matières radioactives comporte un panier (1) de rangement d'assemblages de combustible nucléaire (2), et **en ce que** ledit au moins un dispositif de mesure (10) est fixé sur un composant de ce panier (1).

## Patentansprüche

1. Vorrichtung (10) zum Messen einer maximalen Temperatur, die von einer Komponente erreicht wird, die in einem Sicherheitsbehälter (210) eines mit einer Reihe von radioaktiven Materialien beladenen Gehäuses (200) angeordnet ist, wobei die Messvorrichtung **dadurch gekennzeichnet ist, dass** sie die folgenden Elemente umfasst:
- einen beweglichen Schlitten (12);
- einen festen Körper (14), der eine Führungsbahn (16) des beweglichen Schlittens definiert;
- ein Betätigungselement (18) des beweglichen Schlittens, wobei das Betätigungselement derart temperaturempfindlich ist, dass ein Anstieg dieser eine Ausdehnung des Betätigungselements bewirkt, wobei letzteres dazu in der Lage ist, in Abhängigkeit von der Amplitude seiner Ausdehnung eine Bewegung des beweglichen Schlittens (12) entlang der Führungsbahn (16) zu einem ersten Ende (16a) derselben zu bewirken; und
- einen Mechanismus (22) zum Aufrechterhalten der Position des beweglichen Schlittens (12) in Bezug auf den festen Körper (14), wobei der Mechanismus dazu ausgelegt ist, den beweglichen Schlitten (12) in jeder neuen Position, die sich dem ersten Ende (16a) der Führungsbahn (16) weiter annähert, nach einer Verschiebung, die durch die Ausdehnung des Betätigungselements (18) bewirkt wurde, zu halten.

2. Messvorrichtung nach Anspruch 1, **dadurch gekennzeichnet, dass** das Betätigungselement (18) des beweglichen Schlittens (12) eine Schubvorrichtung für den beweglichen Schlitten bildet.

3. Messvorrichtung nach Anspruch 1 oder 2, **dadurch gekennzeichnet, dass** das Betätigungselement (18) des Schlittens (12) eine Vielzahl von koaxialen Bimetallscheiben (21) umfasst, und von denen mindestens mehrere direkt aufeinanderfolgende in entgegengesetzter Richtung zueinander angeordnet sind, so dass sie sich in Reaktion auf einen Temperaturanstieg in entgegengesetzte Richtungen verformen.

4. Messvorrichtung nach einem der vorhergehenden Ansprüche, **dadurch gekennzeichnet, dass** der Mechanismus (22) zum Halten des beweglichen Schlittens mindestens eines der folgenden Elemente umfasst:
- eine Zahnstange (24, 26);
- eine Sicherungsscheibe (52);
- eine Druckschraube;
- ein magnetisches System.

5. Messvorrichtung nach einem der vorhergehenden Ansprüche, **dadurch gekennzeichnet, dass** der feste Körper (14) eine Temperaturskala (30) umfasst und dass der bewegliche Schlitten (12) einen Indikator (32) umfasst, der mit der Skala (30) zusammenwirkt, oder umgekehrt.

6. Messvorrichtung nach einem der Ansprüche 1 bis 4, **dadurch gekennzeichnet, dass** der feste Körper (14) eine Temperaturskala (30) umfasst und dass der bewegliche Schlitten (12) einen Indikator (32) umfasst, der mit der Skala (30) zusammenwirkt, wobei der am beweglichen Schlitten (12) vorgesehene Indikator (32) durch mindestens eine Öffnung (36) des festen Körpers (14) verläuft.

7. Messvorrichtung nach einem der vorhergehenden Ansprüche, **dadurch gekennzeichnet, dass** die Führungsbahn (16) gerade ist.

8. Messvorrichtung nach einem der vorhergehenden Ansprüche, **dadurch gekennzeichnet, dass** der feste Körper (14) eine Stange (40) umfasst, die vorzugsweise durch den beweglichen Schlitten (12) verläuft.

9. Messvorrichtung nach dem vorhergehenden Anspruch, kombiniert mit Anspruch 3, **dadurch gekennzeichnet, dass** die Stange (40) durch die Bimetallscheiben (21) verläuft.

10. Messvorrichtung nach einem der vorhergehenden Ansprüche, **dadurch gekennzeichnet, dass** der feste Körper (14) eine Außenhülle (50) umfasst, vorzugsweise in Form eines Rohrs und noch bevorzugter mit einem Außendurchmesser von weniger als 30 mm.

11. Paket (100), das ein mit einer Gruppe von radioaktiven Materialien beladenes Gehäuse (200) umfasst, die innen einen Sicherheitsbehälter (210) begrenzt, in dem die Gruppe von radioaktiven Materialien (1, 2) untergebracht ist, und die ferner mindestens eine Messvorrichtung (10) nach einem der vorhergehenden Ansprüche umfasst, die in dem Sicherheitsbehälter (210) untergebracht ist.

12. Paket nach dem vorhergehenden Anspruch, **dadurch gekennzeichnet, dass** die Gruppe von radioaktiven Materialien Kernbrennstabbündel (2) umfasst, die mit Führungsrohren (8) ausgestattet sind, und dass die mindestens eine Messvorrichtung (10) im Inneren eines dieser Führungsrohre (8) untergebracht ist.

13. Paket nach dem vorhergehenden Anspruch, **dadurch gekennzeichnet, dass** mehrere Messvorrichtungen (10) in dem Führungsrohr (8) an unterschiedlichen axialen Positionen desselben untergebracht sind.

14. Paket nach einem der Ansprüche 11 bis 13, **dadurch gekennzeichnet, dass** die Gruppe von radioaktiven Materialien einen Korb (1) zur Lagerung von Kernbrennstabbündeln (2) umfasst und dass die mindestens eine Messvorrichtung (10) an einer Komponente des Korbs (1) befestigt ist.

## Claims

1. Device (10) for measuring a maximum temperature reached by a component placed in a containment chamber (210) of a package (200) loaded with a set of radioactive materials, the measuring device being **characterised in that** it includes the following elements:
- a movable carriage (12);
- a fixed body (14) defining a path for guiding (16) the movable carriage;
- an actuator (18) of the movable carriage, the actuator being substantially at the temperature so that an increase of the latter results in an expansion of this actuator, the latter being capable, depending on the amplitude of the expansion thereof, of causing a movement of the movable carriage (12) along the guide path (16), in the direction of a first end (16a) of the latter; and
- a mechanism (22) for holding the movable carriage (12) in position in relation to the fixed body (14), the mechanism being designed in such a way as to hold the movable carriage (12) in any new position further moving closer to said first end (16a) of the guide path (16), following a movement caused by the expansion of the actuator (18).

2. Measuring device according to claim 1, **characterised in that** the actuator (18) of the movable carriage (12) forms a push-button for the movable carriage.

3. Measuring device according to claim 1 or 2, **characterised in that** the actuator (18) of the carriage (12) comprises a plurality of coaxial bimetal washers (21), and of which at least a plurality of them directly consecutive are arranged opposite one another, so as to deform in the opposite direction in response to a temperature increase.

4. Measuring device according to any one of the preceding claims, **characterised in that** the mechanism (22) for holding the movable carriage includes at least one of the following elements:
- a rack and pinion (24, 26);
- a non-return washer (52);
- a pressure screw;
- a magnetic system.

5. Measuring device according to any one of the preceding claims, **characterised in that** the fixed body (14) includes a temperature graduation (30), and **in that** the movable carriage (12) includes an indicator (32) cooperating with the graduation (30), or vice versa.

6. Measuring device according to any one of claims 1 to 4, **characterised in that** the fixed body (14) includes a temperature graduation (30) and **in that** the movable carriage (12) includes an indicator (32) cooperating with the graduation (30), the indicator (32) provided on the movable carriage (12) passing through at least one hole (36) of the fixed body (14).

7. Measuring device according to any one of the preceding claims, **characterised in that** the guide path (16) is straight.

8. Measuring device according to any one of the preceding claims, **characterised in that** the fixed body (14) includes a rod (40), preferably passing through the movable carriage (12).

9. Measuring device according to the preceding claim combined with claim 3, **characterised in that** the rod (40) passes through the bimetal washers (21).

10. Measuring device according to any one of the preceding claims, **characterised in that** the fixed body (14) includes an external casing (50), preferably in the form of a tube, and even more preferably of external diameter less than 30 mm.

11. Cask (100) comprising a package (200) loaded with a set of radioactive materials, internally delimiting a containment chamber (210) wherein said set of radioactive materials (1, 2) is housed, and also including at least one measuring device (10) according to any one of the preceding claims, housed in the containment chamber (210).

12. Cask according to the preceding claim, **characterised in that** the set of radioactive materials includes nuclear fuel assemblies (2) equipped with guide tubes (8), and **in that** said at least one measuring device (10) is housed inside one of the guide tubes (8).

13. Cask according to the preceding claim, **characterised in that** a plurality of measuring devices (10) are housed in the guide tube (8), at different axial positions of the latter.

14. Cask according to any one of claims 11 to 13, **characterised in that** the set of radioactive materials includes a basket (1) for storing nuclear fuel assemblies (2), and **in that** said at least one measuring device (10) is fixed on a component of this basket (1).
